# EUROPÄISCHE PATENTANMELDUNG

(11) **EP 0 842 910 A2**
(43) Veröffentlichungstag der Anmeldung: **20.05.1998**
(21) Anmeldenummer: 97119708.2
(22) Anmeldetag: 11.11.1997
(51) Int. Cl.: C04B 12/04

(54) **Bindemittel auf der Basis von Wasserglaslösung, Verfahren zu dessen Herstellung sowie dessen Verwendung**

(30) Priorität: 14.11.1996 DE 19647111
(71) Anmelder: Bayerisches Zentrum für Angewandte Energieforschung e.V. ZAE Bayern, 97074 Würzburg (DE)
(72) Erfinder: Korder, Saschan, 91607 Gebsattel (DE); Arduini-Schuster, Mariacarla, 97273 Kürnach (DE); Kuhn, Joachim Dr., 97072 Würzburg (DE); Tappert, Wolfgang, 97074 Würzburg (DE); Fricke, Jochen, Prof. Dr., 97218 Gerbrunn (DE)
(74) Vertreter: Götz, Georg, Dipl.-Ing.

(57) **Zusammenfassung**

Bindemittel auf der Basis von Wasserglaslösung, insbesondere zur Herstellung von Formkörpern aus Haufwerksporen bildenden und/oder granulatförmigen Materialien, wobei in der Wasserglaslösung Kieselsol enthalten ist.

## Beschreibung

Die Erfindung betrifft ein Bindemittel auf der Basis von Wasserglaslösung, insbesondere zur Herstellung von Formkörpern aus Haufwerksporen bildenden und/oder granulatförmigen Materialien. Ferner betrifft die Erfindung ein Herstellungsverfahren sowie diverse Verwendungen eines derartigen Bindemittels.

Wasserglasbindemittel, insbesondere zur Herstellung von Formkörpern aus Granulaten, sind bekannt. Wasserglaslösungen, z.B. Natron- und Kaliumwassergläser, werden nach dem Verdampfen des Wassers bei erhöhten Temperaturen zu schaumförmigen, festen, aber wasserlöslichen Alkalisilikat-Glasmassen. Dieser feste Schaum eignet sich besonders als anorganischer und feuerfester Klebstoff für haufwerksporige Formkörper aus granulatförmigen Materialien. Die Granulate werden nicht punktförmig miteinander verklebt, sondern durch den Schaum in ein festes, komplexes Bindemittelgerüst eingebunden.

Aus DE-A-32 46 502 ist es bekannt, Formkörper aus anorganischen Stoffen, insbesondere Schaumgranulaten, herzustellen, welche mit Wasserglas gebunden sind. Die anorganischen Stoffe, beispielsweise Schaumglas, werden mit wäßrigen Wasserglaslösungen vermischt, geformt und getrocknet. Der Wasserglaslösung werden solche Metalloxide oder Mineralien zugesetzt, die das Wasserglas nicht ausfällen. Ferner wird eine Vermischung mit anorganischem Leichtgranulat, beispielsweise Schaumglas, Blähbeton oder dergleichen vorgeschlagen. Die aus der Mischung hergestellten Formkörper werden alsdann bei erhöhter Temperatur reaktiv getrocknet und anschließend langsam abgekühlt. Als Zusatzstoffe kommen insbesondere Zinkoxid, Eisenoxid, Rotschlamm, Aluminiumoxid, Ton, Glimmer oder Quarzmehl in Betracht. Das reaktive Trocknen wird durchgeführt, indem die Formkörper mit Heißgas von 150° bis 700° Celsius, vorzugsweise 200° bis 500° Celsius behandelt werden. Die Zugabe verschiedener, pulverförmiger, mineralischer Substanzen wie z.B. Eisenoxid, Aluminiumoxid, Zinkoxid usw. führt nicht zum Ausfällen des Wasserglases. Nach der Erhitzung des Bindemittels sind diese Mineralien in die amorphe Wasserglasmasse physikalisch eingebunden und bewirken eine gewisse Wasserfestigkeit. Diese Zusätze haben aber den Nachteil, daß sie die Fähigkeit zum Recycling des hauptsächlich aus Siliciumdioxid bestehenden Bindemittels einschränken, da sie nur noch schwierig von diesem zu trennen sind. Zudem kann man beobachten, daß die Zusatzstoffe im Wasserglas die Schaumbildung des Bindemittels behindern, d.h. Formkörper aus damit verklebten Granulaten sind relativ spröde und weisen eine eingeschränkte Bruchfestigkeit und einen geringen Elastizitätsmodul auf. Des weiteren haben die eingebrachten pulverförmigen Substanzen die in vielen Bereichen nachteilige Eigenschaft, Licht zu stark zu streuen oder zu absorbieren.

In DE-C-32 46 621 wird im Zusammenhang mit der Schaffung von Formkörpern für Bauteilverkleidungen die Verwendung wäßriger Alkalisilikat- bzw. Wasserglaslösung vorgeschlagen, welche mit einer amorphen, wasserhaltigen Kieselsäure in Reaktion gebracht wird. Als Reaktionstemperatur werden 50° bis 200° Celsius vorgeschlagen, wobei eine Formgebung gegebenenfalls unter Zusatz von Füllstoffen stattfindet.

Demgegenüber liegt der Erfindung die Aufgabe zugrunde, unter Vermeidung der obigen Nachteile eine weitere Bindemittelmöglichkeit anzugeben, die sich durch eine niedrige Prozeßtemperatur und optimierte mechanische Eigenschaften auszeichnet. Insbesondere soll die Bruchfestigkeit und der Elastizitätsmodul erhöht sein. Ferner soll die Eigenschaft, Licht stark zu streuen oder zu absorbieren, gemindert sein. Eine weitere Aufgabenkomponente besteht darin, die Fähigkeit gebundenen Materials zum späteren Recycling unter Trennung von Stoffkomponenten zu erhöhen. Auch eine Schaumbildung des Bindemittels soll in ausreichendem Umfang gewährleistet sein.

Zur Lösung wird bei einem Bindemittel mit den eingangs genannten Merkmalen erfindungsgemäß vorgeschlagen, daß die Wasserglaslösung mit Kielselsol versehen ist. Das bedeutet, daß der Wasserglaslösung sehr feinteiliges Siliciumdioxid in Form des Kieselsols zugesetzt wird. Kieselsole sind kolloidale Lösungen von feinstteiligem, amorphen Siliciumdioxid in Wasser (vgl. Ullmann, Band 21, Seite 456 ff.) und dienen im erfindungsgemäßen Zusammenhang als wasserfestigender und zusätzlich stabilisierender Zugabestoff zur Wasserglaslösung. Dadurch lassen sich z.B. granulatartige Materialien oder kugel-, zylinder- oder röhrenförmige Materialien miteinander verbinden. Bei erhöhter Temperatur härtet die Mischung zu einem stabilen, schaumartigen und wasserfesten Bindemittel aus, das nahezu vollständig aus Siliciumdioxid besteht und optisch hochgradig transluzent, gegebenenfalls sogar transparent ist.

Erhitzt man eine Mischung von Wasserglas und Kieselsol bei Temperaturen zwischen 100°C und 300°C, findet eine endotherme Reaktion statt. Die extrem feinen Siliciumdioxidpartikel im Bereich einiger Nanometer bilden Kondensations- und Reaktionskeime für die Ausbildung eines durchgehenden Siliciumdioxid-Gerüsts. Es entsteht eine feste Masse aus nahezu reinem Siliciumdioxid, die unerwarteter Weise eine hohe Wasserfestigkeit aufweist. Die Reaktion läuft bei längerer Heizzeit bei der Temperatur von ca. 250°C vollständig ab, wobei die optimale Wasserfestigkeit des Bindemittels erreicht wird. Zweckmäßig wird die Heizzeit abhängig vom zu verklebenden Material eingestellt. Ausheiztemperaturen bis etwa zum Erweichungspunkt des Wasserglases sind möglich, vorzugsweise ist eine Abbindetemperatur zwischen 200°C und 300°C anzuwenden.

Der sich aus der Wasserglas-Kieselsol-Mischung beim Verdampfen des Wassers bildende Schaum ist besonders feinporig, transluzent und von geringer Dichte. Damit kann eine hochporige und transluzente, gegebenenfalls transparente Klebemasse hergestellt werden. Es zeigt sich, daß mit diesem neuen Bindemittel verklebte Granulat-Formkörper eine höhere Bruchfestigkeit und einen höheren Elastizitätsmodul aufweisen als vergleichbare wasserverklebte Formkörper mit anderen Mineralzusatzstoffen.

Zur Herstellung des Bindemittels wird der Wasserglaslösung das Kieselsol langsam - vorzugsweise unter ständigem Rühren - zugegeben, so daß keine Siliciumdioxidausfällungen stattfinden. Bei einer kleinen Menge von Ausfällungsprodukten ist aber mit keiner Qualitätsminderung des Bindemittels zu rechnen. Der Anteil des Kieselsols beträgt nach einer Ausbildung der Erfindung an der Gesamtmischung des Bindemittels 5 - 50 Gew.-%, vorzugsweise 10 - 20 Gew.-%. Nach bisherigen Erkenntnissen ist die optimale Menge des Kieselsols in der Wasserglas-Kieselsol-Mischung 10 Gew.-%.

Nach einer anderen Ausbildung der Erfindung wird als Wasserglaslösung Natronwasserglas mit einem Siliciumdioxid-Gehalt von 60 - 70 Gew.-% im Feststoffanteil verwendet. Besonders geeignet ist Natronwasserglas bzw. Natriumsilikat unter der Qualitäts- oder Handelsbezeichnung 37/40 oder 38/40. Besonders geeignet sind konzentrierte Lösungen an Kieselsol mit einem Siliciumdioxid-Gehalt von 30 - 60 Gew.-%.

Im Rahmen der allgemeinen erfinderischen Idee liegt zur Lösung der oben genannten Erfindungsaufgabe ein Bindemittel-Herstellungsverfahren, bei dem pyrogene Kieselsäure und/oder Fällungskieselsäure verwendet und eine oder beide mit Wasser vermischt werden, wobei das Kieselsol erzeugt wird. Es werden also pulverförmige, kleinteilige Siliciumdioxid-Partikel in Form von Fällungskieselsäure, pyrogener Kieselsäure (z. B. Sipernat und Aerosil von Degussa) oder Substanzen zur Herstellung eingesetzt, die aus Silicium-Partikeln ähnlicher Größe bestehen. Die hier zu verwendenden Substanzen haben meist Primärpartikel kleiner als 10 Nanometer, welche zu größeren Sekundärpartikeln aggregiert sind. Wesentliche Funktion der verwendeten Stoffe ist einerseits die Keimbildung und andererseits die geringe Lichtstreuung durch die Kleinheit der Partikel.

Nach einer besonderen Ausbildung des erfindungsgemäßen Herstellungsverfahrens wird die Viskosität des Bindemittels durch Wasserzugabe der jeweiligen Verwendung angepaßt, insbesondere weiter erniedrigt. Damit läßt sich das erfindungsgemäße Bindemittel noch leichter über übliche Lackier- und Spritztechnik auf Oberflächen beispielsweise von Metallen, mineralischen Dämmstoffen oder Aerogele auftragen.

Im Rahmen der allgemeinen erfinderischen Idee liegt ferner ein Verfahren zur Herstellung von Formkörpern aus Haufwerksporen bildenden und/oder granulatförmigen Materialien unter Verwendung des erfindungsgemäßen Bindemittels, wobei die Materialien oder der daraus gebildete Formkörper zusammen mit dem Bindemittel einem Heizprozeß unterworfen werden. Dieser dient vor allem zur Härtung des Formkörpers. In besonderer Ausbildung dieses Verfahrens ist die Abbindetemperatur größer als 100°C , vorzugsweise liegt sie zwischen 200° und 300°C. Auch pulverförmige Stoffe sind im Rahmen der Erfindung verwertbar. Granulatförmige, anorganische Materialien finden sich z.B. als dämmende Leichtzuschlagstoffe im Baubereich, z.B. Blähglas oder Schaumglas, Blähton, Blähschiefer, Blähperlit, Vermiculit, Bims, Flugasche usw. Mit dem Einsatz des erfindungsgemäßen Bindemittels zur Verklebung von Blähglasgranulaten mit dem Wasserglas-Kieselsol erhält man einen besonders reinen Siliciumdioxid-Formkörper. Die optische Transparenz oder Transluzenz des Bindemittels spielt hier nur eine untergeordnete Rolle.

Wichtig ist die Haufwerksporigkeit der verwendeten Materialien, damit das bei der Trocknung verdampfende Wasser aus dem Formkörper entweichen kann.

Im Rahmen der allgemeinen erfinderischen Idee liegen auch zahlreiche weitere Verwendungen des erfindungsgemäßen Bindemittels:

Es kann zum Verkleben von glasartigen Strukturen, z.B. Schüttungen oder Stapel aus Kügelchen oder Röhrchen aus Glas, wie sie häufig bei Bauteilen für transparente Wärmedämmung Verwendung finden, eingesetzt werden. Man erhält einen besonders transparenten oder transluzenten Körper, der zudem rein organisch und damit nicht brennbar ist. Bei dieser Verklebung kann durch die Art der Schaumbildung gezielt die optische Lichtstreuung an den Klebestellen eingestellt werden. So ist der optische Eindruck des Gesamtsystems in vorteilhafter Weise gestaltbar.

Eine weitere Einsatzmöglichkeit für das Bindemittel ergibt sich in der Verfestigung und Verklebung von Aerogelgranulat und Aerogelpulver, vorzugsweise von Siliciumdioxid-Aerogel. Gegebenenfalls muß das in der Regel wasserempfindliche Areogel vor dem Vermischen mit dem wasserhaltigen Bindemittel hydrophobisiert werden, oder es muß von vorne herein hydrophobiertes Areogel verwendet werden. Auch hier läßt sich der optische Gesamteindruck gezielt beeinflussen.

Da die oben beschriebene Abbindereaktion des Bindesmittels schon bei Reaktionstemperaturen ab etwa 100°C beginnt, ist es auch möglich, organische Teilchen, deren thermische Belastbarkeit begrenzt ist, zu dämmenden Formkörpern zu verkleben. Hierbei ist zu denken an das Verbinden von Haufwerksporen bildenden Schüttungen oder Stapeln, z. B. aus Kügelchen oder Röhrchen aus Plexiglas, Acryl, Polyvinyl, Kügelchen aus vorgeschäumten Polystyrol (EPS), Schaumstücke aus Polyurethan oder Polyimid. Das Bindemittel haftet zwar nur eingeschränkt an organischen Oberflächen, aber durch eine Einbettung der Materialien in den Schaum ist ein stabiler Formkörper zu erhalten. Dabei muß gegebenenfalls der atmosphärische Druck bei der Abbindereaktion variiert werden, um auch bei niedrigen Reaktionstemperaturen die optimale Wasserfestigkeit des Bindemittels zu gewährleisten. Die Brandfestigkeit des Komposits wird gegenüber den organischen Ausgangsstoffen ebenfalls erhöht.

Nach einer weiteren erfindungsgemäßen Verwendung läßt sich das Bindemittel wegen seiner niedrigen Viskosität mit üblicher Lackier- und Spritztechnik auf Oberflächen, z.B. auf Metalle, mineralische Dämmstoffe oder Aerogele, auftragen. Nach der Abbindereaktion durch Erhitzen entsteht eine geschlossenporige, wasserfeste Siliciumdioxid-Schicht. Gegebenenfalls kann damit die Oberfläche von porigen Strukturen versiegelt werden.

Nach einer weiteren erfindungsgemäßen Verwendung läßt sich mit dem Bindemittel auch das Aufkleben von Vliesen, z.B. aus Glasfasern, oder anderen Kaschierungen auf glatte Oberflächen oder auf haufwerksporige Formkörper realisieren. Wegen der geringen Viskosität läßt sich das erfindungsgemäße Bindemittel mit einer Spritzpistole dünn auf die Platte oder das Vlies auftragen. Außerdem hat der Kieselsolbinder eine Aushärtetemperatur, die noch im Bereich der Temperaturbeständigkeit beispielsweise eines Glasfaservlieses ist. Vor der Verpressung oder dem Aufbringen des Vlieses mit einem Granulat-Bindemittelgemisch gemäß Erfindung muß das Vlies zusätzlich mit Bindemittel besprüht werden. Nach dem Aufschäumen des Bindemittels ist das Vlies ausreichend fest beispielsweise mit einer Platte verklebt. Bei dem Vlies oder einer anderen Kaschierung ergibt sich der Vorteil, daß auf Trennmittel in der zur Herstellung notwendigen Form nahezu verzichtet werden kann.

Soll ein Formkörper oder eine Platte mit oder ohne Kaschierung in einer Form hergestellt werden, so muß die Form derart gestaltet sein, daß der während des Ausheizvorgangs entstehende Wasserdampf möglichst ungehindert entweichen kannn.

Nach einer weiteren erfindungsgemäßen Verwendung können haufwerksporige Formkörper mit Scheiben, gegebenenfalls mit Glasscheiben, zu einem Sandwichsystem verbunden werden. Ferner ist die Verwendung des Bindemittels zur Verklebung von transluzenten oder transparenten Formkörpern mit transparenten Platten, beispielsweise Formkörper aus Aerogelgranulat mit Glasplatten, denkbar.

Eine weitere erfindungsgemäße Verwendung besteht in der Herstellung plattenartiger Formkörper, wofür das Kieselsol-Wasserglas-Bindemittel aufgrund seiner geringen Viskosität und seines optimalen Aufschäumverhaltens geeignet ist. Deshalb reicht eine Bindemittel-Zugschlagmenge von 9 Vol% aus. Dabei ist ein Schüttvolumen der für die Plattenformung nötigen Materialmenge von 118 Vol% vom Endvolumen der Platte zweckmäßig. Mit einer Teflon beschichteten Form kann die Platte in einem Heizvorgang ausgehärtet werden. Die Heiztemperatur beträgt am besten 250°C, wobei eine Heizdauer von zwei Stunden zweckmäßig ist. Mit dem erfindungsgemäßen Bindemittelsystem können so Platten hergestellt werden, die sich durch einen günstigen Elastizitätsmodul und eine hohe Bruchfestigkeit auszeichnen.

Ein weiteres Beispiel einer Verwendung besteht in der Herstellung eines mit dem erfindungsgemäßen Bindemittel verklebten Formkörpers aus Blähglasgranulat:

Einer konzentrierten Natron-Wasserglaslösung der oben erläuterten Typenbezeichnung 38/40 wird Kieselsol mit einem Siliciumdioxid-Gehalt von 45 Gew% beigemischt, so daß der Gewichtsanteil des Kieselsols an der Gesamtmischung zwischen 10 % und 20 % beträgt. Das fertiggestellte Bindemittel wird Blähglasgranulaten der Korngröße 1-2 mm zugemischt, bis die Menge des Bindemittels etwa 5-20 Vol% des Schüttvolumens des Blähglasgranulats beträgt. Diese Mischung wird in eine Form eingefüllt und bei einer Temperatur von 250°C bis zur völligen Trocknung ausgeheizt.

## Patentansprüche

1. Bindemittel auf der Basis von Wasserglaslösung, insbesondere zur Herstellung von Formkörpern aus Hautwerksporen bildenden und/oder granulatförmigen Materialien, dadurch gekennzeichnet, daß in der Wasserglaslösung Kieselsol enthalten ist.

2. Bindemittel nach Anspruch 1, dadurch gekennzeichnet, daß die Wasserglaslösung mit Natronwasserglas gebildet ist.

3. Bindemittel nach Anspruch 2, dadurch gekennzeichnet, daß das Natronwasserglas einen Gehalt an Siliziumdioxid von 60 bis 70 Gewichtsprozent im Feststoffanteil aufweist.

4. Bindemittel nach einem der vorangehenden Ansprüche, dadurch gekennzeichnet, daß der Anteil des Kieselsols an der Gesamtmischung mit Wasserglas 5 bis 50 Gewichtsprozent, vorzugsweise 10 bis 20 Gewichtsprozent beträgt.

5. Bindemittel nach einem der vorangehenden Ansprüche, dadurch gekennzeichnet, daß das Kieselsol einen Gehalt an Silizium von 30 bis 60 Gewichtsprozent, vorzugsweise 45 Gewichtsprozent, aufweist.

6. Verfahren zur Herstellung eines Bindemittels nach einem der vorangehenden Ansprüche, gekennzeichnet durch die Verwendung pyrogener Kieselsäure und/oder Fällungskieselsäure, indem eine oder beide mit Wasser vermischt werden, wobei das Kieselsol erzeugt wird.

7. Verfahren zur Herstellung von Formkörpern aus Haufwerksporen bildenden und/oder granulatförmigen Materialien, unter Verwendung von Bindemittel nach einem der vorangehenden Ansprüche, dadurch gekennzeichnet, daß die Materialien oder der daraus gebildete Formkörper zusammen mit dem Bindemittel einem Heizprozeß unterworfen werden.

8. Verfahren nach Anspruch 7, dadurch gekennzeichnet, daß der Heizprozeß mit einer Temperatur von wenigstens 100 °C, insbesondere zwischen 200 °C bis 300 °C, vorzugsweise bei 250 °C, betrieben wird.

9. Verfahren nach einem der Ansprüche 7 bis 8, dadurch gekennzeichnet, daß als Haufwerksporen bildende Materialien granulatförmige Leichtzuschlagstoffe wie zum Beispiel Blähglas, Blähton, Blähschiefer, Blähperlit, Vermiculit, Bims oder Flugasche verwendet werden.

10. Verfahren nach einem der Ansprüche 7 bis 9, dadurch gekennzeichnet, daß als Haufwerksporen bildende Materialien granulat- und pulverartige Aerogele verwendet werden.

11. Verfahren nach einem der Ansprüche 7 bis 10, dadurch gekennzeichnet, daß als Haufwerksporen bildende Materialien organische Substanzen oder Natursubstanzen wie zum Beispiel Plexiglas, Acryl, Polyvinyl, Polystrol (EPS), Polyurethan, Polyimid oder Holz verwendet werden.

12. Verfahren nach einem der Ansprüche 7 bis 11, dadurch gekennzeichnet, daß die die Haufwerksporen bildenden und/oder granulatförmigen Materialien in einer Form dem Heizprozeß zur Aushärtung unterworfen werden.

13. Verwendung des Bindemittels nach einem der vorangehenden Ansprüche zur Beschichtung oder Versiegelung von Material- oder Stoffoberflächen.

14. Verwendung des Bindemittels nach einem der vorangehenden Ansprüche zur Verklebung von Vliesmaterial mit plattenartigen und/oder flachen Formkörpern.

15. Verwendung des Bindemittels nach einem der vorangehenden Ansprüche zur Verklebung von transluzenten oder transparenten Formkörpern mit transparenten Platten.
